# EUROPÄISCHE PATENTSCHRIFT

(11) **EP 2 048 053 B1**
(45) Veröffentlichungstag und Bekanntmachung des Hinweises auf die Patenterteilung: **21.07.2010**
(21) Anmeldenummer: 09151845.6
(22) Anmeldetag: 10.11.2006
(51) Int. Cl.: B60W 10/02, B60W 10/06, B60W 10/18, B60W 10/08, B60W 10/30, B60W 30/02, B60W 30/04, B60T 8/1755

(54) **Verfahren zum Ansteuern des mechanischen Antriebsstrangsystems eines Kraftfahrzeuges**
Method for controlling the mechanical drive train of a vehicle
Procédé pour commander la chaîne cinématique mécanique d'un véhicule automobile

(30) Priorität: 12.11.2005 DE 102005039930
(43) Veröffentlichungstag der Anmeldung: 15.04.2009
(62) Teilanmeldung aus: 06818450.6
(73) Patentinhaber: ZF Friedrichshafen AG, 88038 Friedrichshafen (DE)
(72) Erfinder: Reith, Ulrich, 88281, Schlier (DE)

(56) Entgegenhaltungen:
- DE-A1- 4 017 845
- DE-A1- 19 539 973
- DE-A1- 19 615 831
- US-A- 4 899 279
- US-A- 5 927 831

## Beschreibung

Die Erfindung betrifft ein Verfahren zum Ansteuern des mechanischen Antriebsstrangsystems eines Kraftfahrzeuges mit automatischem oder automatisiertem Getriebe in Verbindung mit einem auf die Räder des Fahrzeuges einwirkenden Stabilisierungssystem, umfassend eine elektronische Fahrzeugsteuerungseinrichtung, über die beispielsweise das Getriebe in Abhängigkeit von mittels Sensoren erfassten Standard-Fahrzuständen geschaltet und das Stabilisierungssystem bei Auftreten von Nichtstandard-Fahrzuständen gesteuert wird, wobei bei Standard-Fahrzuständen einerseits und Nichtstandard-Fahrzuständen andererseits unterschiedliche Ansteuerungsprogramme zum Ansteuern des Antriebsstrangsystems zur Anwendung kommen.

Bei automatischen Getrieben erfolgt der Gangwechsel, also das Öffnen sowie Schließen der Kupplung und das Schalten des Getriebes sowie gegebenenfalls die Drehzahlsteuerung des Antriebsmotors zu Synchronisationszwecken vollautomatisch in Abhängigkeit von über Sensoren erfassten Standard-Fahrzuständen. Bei automatisierten Schaltgetrieben kann der Fahrer einen gewünschten Gang vorwählen; der eigentliche Gangwechsel erfolgt dann ebenfalls vollautomatisch.

Unter dem Begriff "Stabilisierungssystem" wird im Folgenden jedes System im Kraftfahrzeug verstanden, welches bei Nichtstandard-Fahrzuständen auf die Räder des Fahrzeuges einwirkt. In diesem Sinne kann als das einfachste Stabilisierungssystem ein so genanntes ABS (Antiblockiersystem) verstanden werden, welches ein Blockieren einzelner Räder beim Bremsen verhindert und damit die Lenkbarkeit sowie die Fahrstabilität erhält und den Bremsweg optimiert. Weitere Stabilisierungssysteme sind beispielsweise das ASR-System (Antischlupfregelungssystem), das EBS (elektronisch geregeltes Bremssystem), welches ABS- und ASR-Funktionen elektronisch regelt und in einem System zusammenfasst, sowie höher entwickelte Fahrdynamik-Regelsysteme mit Roll-, Nick- und Gierkontrolle (VDC = vehicle dynamic stability control) und dergleichen.

Im Allgemeinen ist es nicht auszuschließen, dass beispielsweise ein Getriebeschaltvorgang einerseits und eine Aktivierung des Stabilisierungssystems andererseits gleichzeitig erfolgen. Es gibt jedoch Situationen, in denen es ungünstig ist, wenn sich das Drehmoment im Antriebsstrang etwa durch Öffnen des geschlossenen Antriebsstranges, durch Schließen des geöffneten Antriebsstranges, durch auf den Antriebsstrang einwirkende Zusatzbremsen bzw. Zusatzantriebe oder ähnliche Steuerungsmaßnahmen ändert. Wird beispielsweise der Antriebsstrang während des Getriebeschaltvorganges geöffnet, so ergeben sich im Antriebsstrang Drehmomentschwankungen, welche die Wirkungsweise eines gleichzeitig wirksamen Bremseneingriffes eines automatischen Bremssystems (z.B. EBS) nachteilig beeinflussen.

Vor diesem Hintergrund liegt der Erfindung die Aufgabe zugrunde, ein Verfahren zum Ansteuern des mechanischen Antriebsstrangsystems eines Kraftfahrzeugs gemäß dem Oberbegriff des Anspruchs 1 zu schaffen, bei welchem Drehmomentänderungen im Antriebsstrang bei Fahrzuständen, bei denen diese die Funktion der Stabilisierungssysteme nachteilig beeinflussen, vermieden werden.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass es möglich sein sollte, derartige Fahrzustände mittels der Fahrzeugsteuerungseinrichtung zu identifizieren und beim Auftreten solcher Fahrzustände Schalt- und Steuerungsmaßnahmen, welche eine relevante Drehmomentänderung im Antriebsstrang zur Folge haben, zu unterbinden.

Aus der DE 195 39 973 A1 ist ein Verfahren zum Betrieb einer hydraulischen Bremsanlage mit einem Antiblockiersystem (ABS) bekannt. Zur Steigerung der Qualität der ABS-Regelung wird der bei Eintritt in die ABS-Regelung momentane Druck-Istwert gespeichert und mit einem Bremskraftverstärker der Druck-Istwert konstant gehalten.

Durch die US 4,899,279 ist bereits ein Verfahren zum Ansteuern des mechanischen Antriebsstrangsystems (AMT-system = automatic mechanical transmission system) eines Kraftfahrzeuges mit automatischem oder automatisiertem Getriebe in Verbindung mit einem Antiblockiersystem bekannt, bei welchem beim Auftreten einer Radblockiersituation ein Eingriff in die Konstellation des Antriebsstranges erfolgt. Bei diesem bekannten Ansteuerungsverfahren wird über an den gebremsten Rädern angeordnete Sensoren eine Radblockiersituation erfasst und sodann der Antriebsstrang durch Ausrücken der Kupplung geöffnet, um das Getriebe und den Antriebsmotor von den Rädern abzukoppeln, so dass beim Beschleunigen der blockierten Räder auf die der Fahrzeuggeschwindigkeit entsprechende Drehzahl die verzögernde Wirkung der Massenträgheit von Getriebe und Motor ausgeschaltet wird.

Wie bereits weiter vorne dargelegt wurde, besteht jedoch die Gefahr, dass Drehmomentänderungen im Antriebsstrang, beispielsweise durch Öffnen desselben während des Eingriffs eines Stabilisierungssystems, dessen Funktion nachteilig beeinflussen können, so dass es nach neuerer Erkenntnis vorteilhafter ist, dafür Sorge zu tragen, dass diesbezügliche Drehmomentänderungen im Antriebsstrang während des Eingriffes von Stabilisierungssystemen unterbunden werden.

Die Erfindung geht demnach aus von einem Verfahren zum Ansteuern des mechanischen Antriebsstrangsystems eines Kraftfahrzeuges mit automatischem oder automatisiertem Getriebe in Verbindung mit einem auf die Räder des Fahrzeuges einwirkenden Stabilisierungssystem, umfassend eine elektronische Fahrzeugsteuerungseinrichtung, über die beispielsweise das Getriebe in Abhängigkeit von mittels Sensoren erfassten Standard-Fahrzuständen geschaltet und das Stabilisierungssystem beim Auftreten von Nichtstandard-Fahrzuständen gesteuert wird, wobei bei Standard-Fahrzuständen einerseits und Nichtstandard-Fahrzuständen andererseits unterschiedliche Ansteuerungsprogramme zum Ansteuern des Antriebsstrangsystems zur Anwendung kommen.

Zur Lösung der gestellten Aufgabe ist vorgesehen, dass das Stabilisierungssystem ein ABS-Steuergerät umfasst und zur Bildung eines EingriffsSignals der Bremsdruckverlauf im Bremssystem des Fahrzeuges ständig erfasst und mit einem in der Fahrzeugsteuereinrichtung abgelegten, für einen Eingriff des ABS-Steuer-gerätes typischen Bremsdruckverlaufsmuster verglichen wird, und dass bei einer wenigstens annähernden Übereinstimmung des aktuellen Bremsdruckverlaufes mit dem abgelegten Bremsdruckverlaufsmuster eine das im Antriebsstrang wirkende aktuelle Drehmoment verändernde Steuerungsmaßnahme, beispielsweise ein Öffnen der Fahrkupplung, durch die Fahrzeugsteuerung unterbunden wird.

Gemäß einer bevorzugten Ausgestaltung der Erfindung ist vorgesehen, dass bei einem das Auftreten eines Nichtstandard-Fahrzustandes bzw. einen Eingriff des Stabilisierungssystems anzeigenden Eingriffssignal zuerst durch die Fahrzeugsteuerungseinrichtung geprüft wird, ob die aktuelle Antriebsstrang-Konstellation den vorgesehenen Eingriff des Stabilisierungssystems ermöglicht oder nicht, und dass im letzteren Fall zunächst durch die Fahrzeugsteuerungseinrichtung eine den Eingriff ermöglichende Antriebsstrang-Konstellation hergestellt wird.

Um die Antriebsstrang-Konstellation für den vorgesehenen Eingriff des Stabilisierungssystems zu optimieren, ist in weiterer Ausgestaltung der Erfindung vorgesehen, dass die Fahrzeugsteuerungseinrichtung grundsätzlich überprüft, welche mit dem Antriebsstrang zusammenwirkenden Aggregate für den vorgesehenen Eingriff erforderlich und welche nicht erforderlich sind, und sodann gezielt die erforderlichen Aggregate mit dem Antriebsstrang koppelt bzw. die nicht erforderlichen Aggregate abkoppelt.

Gemäß der Erfindung umfassen die von der Fahrzeugsteuerungseinrichtung zu unterbindenden Steuerungsmaßnahmen das Öffnen des geschlossenen Antriebsstranges, das Schließen des geöffneten Antriebsstranges sowie die Aktivierung von auf den Antriebsstrang wirkenden Zusatzbremsen und Zusatzantrieben. Als Zusatzbremsen werden beispielsweise Retarder (Primärretarder oder Sekundärretarder), Motorbremsen, Getriebebremsen usw. verstanden. Zusatzantriebe sind beispielsweise Startermotoren, Generatoren sowie ganz allgemein elektrische Verbraucher mit einem nicht zu vemachlässigenden Stromverbrauch.

Gemäß einer bevorzugten Ausführungsform der Erfindung umfasst das Stabilisierungssystem ein übergeordnetes Steuergerät, dem mehrere auf das Antriebssystem des Fahrzeuges einwirkende Steuergeräte bzw. Steuerfunktionen untergeordnet sind, wobei bei einem Eingriff eines der untergeordneten Steuergeräte bzw. einer Steuerfunktion ein Eingriffssignal von dem übergeordneten Steuergerät ausgegeben wird.

Wenn beispielsweise das Fahrzeug mit einem EBS-Steuergerät ausgestattet ist, dann gibt in demjenigen Fall, in dem die ABS-Funktion aktiviert wird, das EBS-Steuergerät ein Signal aus, mit welchem das oben beschriebene alternative Ansteuerungsprogramm aufgerufen wird, welches zu Drehmomentschwankungen im Antriebsstrang führende Steuerungsmaßnahmen unterbindet.

Entsprechend einer besonderen Ausgestaltung der Erfindung ist vorgesehen, dass das übergeordnete Steuergerät ein EBS-Steuergerät ist, dem zumindest eine Antiblockierfunktion und eine Antriebsschlupfregelfunktion zugeordnet sind.

Gemäß einer anderen Ausgestaltung der Erfindung ist als übergeordnetes Steuergerät ein Fahrdynamik-Stabilisierungssystem vorgesehen, dem außer einer Antiblockierfunktion und einer Antriebsschlupfregelfunktion weitere Funktionen, wie etwa Längs-, Hoch- oder Querdynamik-Stabilisierungsfunktionen zugeordnet sind.

Die Erfindung lässt sich anhand von Ausführungsbeispielen weiter erläutern. Dazu ist der Beschreibung eine Zeichnung beigefügt. Diese zeigt schematisch ein Blockschaltbild eines Antriebsstrangsystems für Fahrzeuge, bei welchem eine Ausführungsform der vorliegenden Erfindung verwirklicht ist.

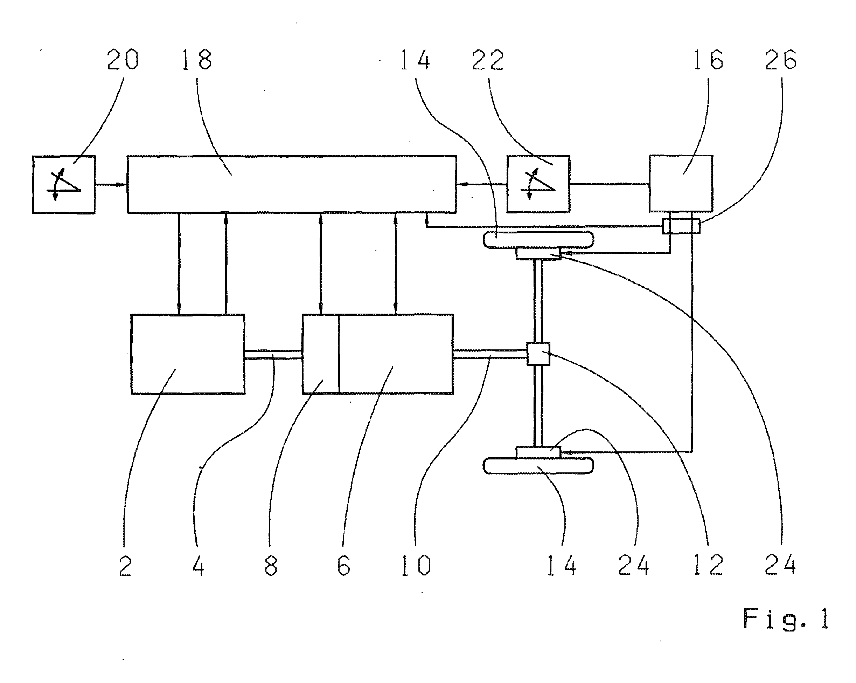

Das in der Figur dargestellte Antriebssystem eines Fahrzeuges umfasst einen Antriebsmotor 2, welcher über eine Motorausgangswelle 4 mit einem automatischen oder automatisierten Getriebe 6 antriebsverbunden ist, dem eine eingangsseitige Kupplung 8 zugeordnet ist. Eine Getriebeausgangswelle 10 ist über ein Differentialgetriebe 12 mit den Antriebsrädern 14 antriebsverbunden. Der Motor 2 mit seiner Motorausgangswelle 4, die Kupplung 8 und das Getriebe 6 bilden definitionsgemäß das Antriebsstrangsystem.

Das in der Figur dargestellte Antriebssystem umfasst auch ein beispielsweise auf die Bremsen 24 der Antriebsräder 14 einwirkendes Stabilisierungssystem 16, welches im dargestellten Fall ein ABS-Steuergerät ist.

Das dargestellte Antriebssystem wird durch eine Fahrzeugsteuerungseinrichtung 18 gesteuert. Die Fahrzeugsteuerungseinrichtung 18 erhält als Eingangssignale beispielsweise Informationen über die Stellung eines Gaspedals 20, Informationen über den Betriebszustand des Antriebsmotors 2, die Stellung der Kupplung 8, den Schaltzustand des Getriebes 6 und über die Stellung eines Bremspedals 22 der Betriebsbremse. Der Antriebsmotor 2, die Kupplung 8 und das Getriebe 6 werden über die Fahrzeugsteuerungseinrichtung 18 gesteuert und/oder geregelt.

Das ABS-Steuergerät bzw. Stabilisierungssystem 16 ist wie angedeutet funktional mit den den Antriebsrädern 14 zugeordneten Bremsen 24 verbunden und kann den Bremsdruck der Bremsen 24 in an sich bekannter Weise einzeln steuern, um ein Blockieren jeweiligen Räder zu verhindern.

Der an den Bremsen 24 anliegende aktuelle Bremsdruck bzw. Bremsdruckverlauf wird über einen Bremsdruckverlaufsensor 26 erfasst und an die Fahrzeugsteuerungseinrichtung 18 gemeldet. In der Fahrzeugsteuerungseinrichtung 18 ist ein für eine Aktivität des ABS-Steuergerätes bzw. Stabilisierungssystems 16 typisches Bremsdruckverlaufsmuster abgelegt. Wenn der vom Bremsdruckverlaufssensor 26 erfasste Bremsdruckverlauf dem abgelegten Bremsdruckverlaufsmuster wenigstens annähernd entspricht, dann kommt in der Fahrzeugsteuerungseinrichtung 18 das alternative Ansteuerungsprogramm zur Anwendung, welches einen das Drehmoment im Antriebsstrang verändernden Eingriff, also beispielsweise ein Öffnen des Antriebsstrangsystems, unterbindet. Es sei hier erwähnt, dass dabei in Kauf genommen wird, dass das System nicht unterscheiden kann, ob tatsächlich das ABS-Steuergerät aktiv ist oder der erfasste Bremsdruckverlauf auf andere Weise, beispielsweise durch den Fahrer selbst, hervorgerufen wird.

Im Folgenden werden weitere Anwendungsfälle beschrieben.

Wenn ein Fahrzeug über ein EBS-Steuergerät verfügt, dann meldet sich dieses Gerät mit seiner "source address" auf dem "CAN-Verbund" (CAN = Controller Area Network), wenn ein automatisches Stabilisierungssystem in die Funktion der Fahrzeugbremsen 24 eingreift. Da die ABS-Funktion im Wesentlichen eine Unterfunktion des EBS-Systems darstellt, meldet sich bei einer ABS-Bremsung nicht ein ABS-Steuergerät, sondern das EBS-Steuergerät auf dem CAN.

Wenn das Fahrzeug mit einem VDC-System (VDC = Vehicle Dynamic Stability Control) ausgestattet ist, dann kann das so genannte "VDC Information Signal" verwendet werden. Dieses Flag wird gesetzt bzw. dieses Signal wird erzeugt, wenn das VDC-System aktiv ist. Wenn das VDC-System dieses Signal aussendet, wird das Fahrzeug stabilisiert. Ob das Fahrzeug eine ABS-Bremsung ausführt oder in seiner Längs-, Vertikal- oder Querdynamik stabilisiert wird, kann nicht unterschieden werden; ein Öffnen des Antriebsstranges wäre jedoch in jedem Fall ungünstig.

Es gibt folgende zusätzliche Signale, die abgefragt werden sollten, bevor eine Öffnung des Antriebsstranges initiiert wird.
a) ROP (ROP = Roll Over Prevention) - Motorsteuerung aktiv:
   Wenn dieser Modus aktiv ist, greift das Fahrdynamik-Stabilisierungssystem auf den Motorregler zu. Ziel ist die Stabilisierung des Fahrzeuges durch eine geeignete Veränderung des aktuellen Drehmomentes im Antriebsstrang. Würde der Antriebsstrang in dieser Situation geöffnet, bliebe dieser Eingriff wirkungslos.
b) ROP - Bremsensteuerung aktiv:
   Wenn dieser Modus aktiv ist, versucht das Fahrdynamik-Stabilisierungssystem durch geeignete Bremseingriffe das Fahrzeug zu stabilisieren. Zusätzliche Drehmomentschwankungen im Antriebsstrang, wie sie beispielsweise bei einem Getriebeschaltvorgang auftreten würden, könnten störend wirken. Das Öffnen eines geschlossenen Antriebsstranges oder das Schließen eines geöffneten Antriebsstranges wäre hier ungünstig.
c) YC (YC = Yaw Control) - Motorsteuerung aktiv:
   Wenn dieser Modus aktiv ist, greift das Fahrdynamik-Stabilisierungssystem auf den Motorregler zu. Es wird versucht, eine Fahrzeugrotation um die Hochachse durch eine geeignete Veränderung des aktuellen Drehmomentes im Antriebsstrang zu verhindern. Würde der Antriebsstrang in dieser Situation geöffnet, bliebe dieser Eingriff wirkungslos.
d) YC - Bremssteuerung aktiv:
   Wenn dieser Modus aktiv ist, versucht das Fahrdynamik-Stabilisierungssystem durch geeignete Bremseingriffe eine Fahrzeugrotation um die Hochachse zu verhindern. Zusätzliche Drehmomentschwankungen im Antriebsstrang, wie sie bei einem Getriebeschaltvorgang auftreten würden, könnten störend wirken. Das Öffnen eines geschlossen Antriebsstranges oder das Schließen eines geöffneten Antriebsstranges wäre hier ungünstig.
e) Gierrate:
   Dieses Signal zeigt an, wie stark sich das Fahrzeug um die Hochachse dreht. Entspricht der Signalverlauf definierten Mustern oder übersteigt das Signal definierte Grenzwerte, definierte Gradienten usw., dann kann davon ausgegangen werden, dass ein Eingriff durch ein Fahrdynamik-Stabilisierungssystem bevorsteht oder aktiv ist. Das Öffnen eines geschlossenen Antriebsstranges oder das Schließen eines geöffneten Antriebsstranges wäre hier ungünstig.
f) Querbeschleunigung:
   Dieses Signal zeigt die Querbeschleunigung eines Fahrzeuges an. Entspricht der Signalverlauf definierten Mustern oder übersteigt das Signal definierte Grenzwerte, definierte Gradienten usw., so kann davon ausgegangen werden, dass ein Eingriff durch ein Fahrdynamik-Stabilisierungssystem bevorsteht oder aktiv ist. Das Öffnen eines geschlossenen Antriebsstranges oder das Schließen eines geöffneten Antriebsstranges wäre hier ungünstig.
g) Längsbeschleunigung:
   Dieses Signal zeigt die Längsbeschleunigung eines Fahrzeuges an. Entspricht der Signalverlauf definierten Mustern oder übersteigt das Signal definierte Grenzwerte, definierte Gradienten usw., kann davon ausgegangen werden, dass ein Eingriff durch ein Fahrdynamik-Stabilisierungssystem bevorsteht oder aktiv ist. Das Öffnen eines geöffneten Antriebsstranges oder das Schließen eines geöffneten Antriebsstranges wäre hier ungünstig.

Wie weiter vorne bereits erläutert wurde, kann das aktuelle Drehmoment im Antriebsstrang auch durch Zusatzbremsen oder Zusatzantriebe beeinflusst werden. Bei aktivem Fahrdynamik-Stabilisierungssystem sollen Zusatzbremsen, wie Retarder (Primärretarder oder Sekundärretarder), Motorbremsen, Getriebebremsen usw. im Allgemeinen nicht aktiviert werden. Eine Ausnahme besteht dann, wenn das Fahrdynamik-Stabilisierungssystem eine Aktivierung von Zusatzbremsen anfordert, um das Stabilisierungsziel zu erreichen.

Ebenso sollen eventuell vorhandene Zusatzantriebe (z.B. Startermotor, Generator usw.) im Allgemeinen nicht aktiviert werden, wenn ein Fahrdynamik-Stabilisierungssystem aktiv ist, um zusätzlich wirkende Drehmomente im Antriebsstrang zu vermeiden. Eine Ausnahme besteht auch hier, wenn eine Aktivierung von Zusatzantrieben geeignet ist, die im Antriebsstrang wirkenden Drehmomente gezielt zu beeinflussen. Beispielsweise wirken mit dem Antriebsstrang antriebsverbundene Elektromotoren in der Regel spontaner als Verbrennungsmotoren, so dass sie die gewünschten Drehmomentveränderungen schneller und genauer als ein Verbrennungsmotor realisieren können.

Im allgemeinen überprüft die Fahrzeugsteuerungseinrichtung (18) bei Auftreten eines Eingriffssignals zuerst, ob überhaupt eine den vorgesehenen Eingriff ermöglichende Konstellation des Antriebsstranges gegeben ist; wenn das nicht der Fall ist, dann stellt die Fahrzeugsteuerungseinrichtung diese zunächst her, bevor der Eingriff erfolgen kann, und wobei dann in der beschriebenen Weise alle diesen Eingriff störenden Steuerungsmaßnahmen unterbunden werden. Dabei besteht auch die Möglichkeit, dass die Antriebsstrang-Konstellation hinsichtlich der angekoppelten bzw. abgekoppelten Aggregate für diesen Eingriff optimiert wird, wie weiter vorne schon erläutert wurde.

### Bezugszeichen

- 2: Antriebsmotor
- 4: Motorausgangswelle
- 6: Getriebe
- 8: Kupplung
- 10: Getriebeausgangswelle
- 12: Differentialgetriebe
- 14: Antriebsräder
- 16: Stabilisierungssystem
- 18: Fahrzeugsteuerungseinrichtung
- 20: Gaspedal
- 22: Bremspedal
- 24: Bremsen
- 26: Bremsdruckverlaufsensor

## Patentansprüche

1. Verfahren zum Ansteuern des mechanischen Antriebsstrangsystems (2, 4, 6, 8) eines Kraftfahrzeuges mit automatischem oder automatisiertem Getriebe (6) in Verbindung mit einem auf die Räder (14) des Fahrzeuges einwirkenden Stabilisierungssystem (16), umfassend eine elektronische Fahrzeugsteuerungseinrichtung (18), über die beispielsweise das Getriebe (6) in Abhängigkeit von mittels Sensoren erfassten Standard-Fahrzuständen geschaltet und das Stabilisierungssystem (16) bei Auftreten von Nichtstandard-Fahrzuständen gesteuert wird, wobei bei Standard-Fahrzuständen einerseits und nicht Nichtstandard-Fahrzuständen andererseits unterschiedliche Ansteuerungsprogramme zum Ansteuern des Antriebsstrangsystems zur Anwendung kommen, **dadurch gekenzeichnet, dass** das Stabilisierungssystem (16) ein ABS-Steuergerät umfasst, wobei zur Bildung eines Eingriffssignals der Bremsdruckverlauf im Bremssystem des Fahrzeuges ständig erfasst und mit einem in der Fahrzeugsteuerungseinrichtung (18) abgelegten, für einen Eingriff des ABS-Steuergerätes typischen Bremsdruckverlaufsmuster verglichen wird, und dass bei einer wenigstens annähernden Übereinstimmung des aktuellen Bremsdruckverlaufes mit dem abgelegten Bremsdruckverlaufsmuster eine das im Antriebsstrang (2, 4, 6, 8) wirkende aktuelle Drehmoment verändernde Steuerungsmaßnahme durch die Fahrzeugsteuerungseinrichtung (18) unterbunden wird.

2. Verfahren nach Anspruch 1, **dadurch gekennzeichnet, dass** bei einem das Auftreten eines Nichtstandard-Fahrzustandes bzw. einen Eingriff des Stabilisierungssystems (16) anzeigenden Eingriffssignal zuerst durch die Fahrzeugsteuerungseinrichtung (18) geprüft wird, ob die aktuelle Antriebsstrang-Konstellation den vorgesehenen Eingriff des Stabilisierungssystems ermöglicht oder nicht, und dass im letzteren Fall zunächst durch die Fahrzeugsteuerungseinrichtung (18) eine den Eingriff ermöglichende Antriebsstrang-Konstellation hergestellt wird.

3. Verfahren nach Anspruch 2, **dadurch gekennzeichnet, dass** dann, wenn für den vorgesehenen Eingriff erforderliche Aggregate vom Antriebsstrang (2, 4, 6, 8) abgekoppelt sind, diese mit dem Antriebsstrang gekoppelt werden.

4. Verfahren nach Anspruch 2 oder 3, **dadurch gekennzeichnet, dass** dann, wenn für den vorgesehenen Eingriff nicht erforderliche Aggregate mit dem Antriebsstrang (2, 4, 6, 8) gekoppelt sind, diese vom Antriebsstrang abgekoppelt werden.

5. Verfahren nach einem der Ansprüche 1 bis 4, **dadurch gekennzeichnet, dass** die von der Fahrzeugsteuerungseinrichtung (18) zu unterbindenden Steuerungsmaßnahmen das Öffnen des geschlossenen Antriebsstranges (2, 4, 6, 8), das Schließen des geöffneten Antriebsstranges sowie die Aktivierung von auf den Antriebsstrang wirkenden Zusatzbremsen und Zusatzantrieben umfassen.

6. Verfahren nach einem der Ansprüche 1 bis 5, **dadurch gekennzeichnet, dass** das Stabilisierungssystem ein übergeordnetes Steuergerät umfasst, dem mehrere auf den Antriebsstrang des Fahrzeuges einwirkende Steuergeräte bzw. Steuerfunktionen zugeordnet sind, und dass bei einem Eingriff eines der untergeordneten Steuergeräte bzw. einer der Steuerfunktionen ein Eingriffssignal von dem übergeordneten Steuergerät ausgegeben wird.

7. Verfahren nach Anspruch 6, **dadurch gekennzeichnet, dass** das übergeordnete Steuergerät ein EBS-Steuergerät ist, dem zumindest eine Antiblockierfunktion und eine Antriebsschlupfregelfunktion zugeordnet sind.

8. Verfahren nach Anspruch 6, **dadurch gekennzeichnet, dass** das übergeordnete Steuergerät ein Fahrdynamik-Stabilisierungssystem ist, dem außer einer Antiblockierfunktion und einer Antriebsschlupfregelfunktion weitere Funktionen, wie etwa Längs-, Hoch- oder Querdynamik-Stabilisierungsfunktionen zugeordnet sind.

## Claims

1. Method for actuating the mechanical drive train system (2, 4, 6, 8) of a motor vehicle with an automatic or automatic transmission (6) in conjunction with a stabilization system (16) which acts on the wheels (14) of the vehicle, comprising an electronic vehicle control device (18) via which, for example, the transmission (6) is shifted as a function of standard driving states which are detected by means of sensors, and the stabilization system (16) is controlled when the non-standard driving states occur, wherein in the case of standard driving states on the one hand and non-standard driving states on the other, different actuation programs are used for actuating the drive train system, **characterized in that** the stabilization system (16) comprises an ABS control unit, wherein, in order to form an intervention signal, the brake pressure profile in the brake system of the vehicle is continuously detected and compared with a brake pressure profile pattern which is stored in the vehicle control device (18) and is typical for intervention in the ABS control unit, and **in that** when there is at least approximate correspondence between the current brake pressure profile and the stored brake pressure profile pattern a control measure which changes the current torque acting on the drive train (2, 4, 6, 8) is suppressed by the vehicle control device (18).

2. Method according to Claim 1, **characterized in that**, when there is an intervention signal which indicates the occurrence of a non-standard driving state or intervention by the stabilization system (16), testing is firstly carried out by the vehicle control device (18) to determine whether or not the current drive train configuration permits the anticipated intervention by the stabilization system, and **in that**, in the latter case, a drive train configuration which permits the intervention is firstly set up by the vehicle control device (18).

3. Method according to Claim 2, **characterized in that** if assemblies which are necessary for the anticipated intervention are decoupled from the drive train (2, 4, 6, 8), said assemblies are coupled to the drive train.

4. Method according to Claim 2 or 3, **characterized in that** if assemblies which are not necessary for the anticipated intervention are coupled to the drive train (2, 4, 6, 8), said assemblies are decoupled from the drive train.

5. Method according to one of Claims 1 to 4, **characterized in that** the control measures which are to be suppressed by the vehicle control device (18) comprise the opening of the closed drive train (2, 4, 6, 8), the closing of the opened drive train and the activation of additional brakes and additional drives which act on the drive train.

6. Method according to one of Claims 1 to 5, **characterized in that** the stabilization system comprises a superordinate control unit to which a plurality of control units and control functions which act on the drive train of the vehicle are assigned, and **in that**, when there is an intervention by one of the subordinate control units or one of the control functions, an intervention signal is output via the superordinate control unit.

7. Method according to Claim 6, **characterized in that** the superordinate control unit is an EBS control unit to which at least one anti-lock function and one traction control function are assigned.

8. Method according to Claim 6, **characterized in that** the superordinate control unit is a vehicle movement dynamics stabilization system to which not only an anti-lock function and a traction control function but also further functions such as, for example, longitudinal, vertical or lateral dynamics stabilization functions are assigned.

## Revendications

1. Procédé pour commander le système de chaîne cinématique mécanique (2, 4, 6, 8) d'un véhicule automobile comprenant une transmission automatique ou automatisée (6) en liaison avec un système de stabilisation (16) agissant sur les roues (14) du véhicule, comprenant un dispositif de commande électronique du véhicule (18), par le biais duquel par exemple la transmission (6) est commutée en fonction d'états de conduite standard détectés au moyen de capteurs et le système de stabilisation (16) est commandé dans le cas de l'apparition d'états de conduite non standard, dans lequel, dans le cas d'états de conduite standard d'une part et dans le cas d'états de conduite non standard d'autre part, différents programmes de commande pour commander le système de chaîne cinématique sont utilisés, **caractérisé en ce que** le système de stabilisation (16) comprend un appareil de commande ABS, la courbe de pression de freinage dans le système de freinage du véhicule étant détectée en permanence pour former un signal d'intervention, et étant comparée à un modèle de courbe de pression de freinage typique pour une intervention de l'appareil de commande ABS, enregistré dans le dispositif de commande du véhicule (18), et **en ce que** dans le cas d'une coïncidence au moins approximative entre la courbe de pression de freinage actuelle et le modèle de courbe de pression de freinage enregistré, une mesure de commande modifiant le couple actuel agissant dans la chaîne cinématique (2, 4, 6, 8) est supprimée par le dispositif de commande du véhicule (18).

2. Procédé selon la revendication 1, **caractérisé en ce que** dans le cas d'un signal d'intervention indiquant l'apparition d'un état de conduite non standard ou d'une intervention du système de stabilisation (16), le dispositif de commande du véhicule (18) vérifie tout d'abord si la constellation de la chaîne cinématique permet ou non l'intervention prévue du système de stabilisation, et **en ce que** dans ce dernier cas, on crée d'abord une constellation de la chaîne cinématique permettant une intervention par le dispositif de commande du véhicule (18).

3. Procédé selon la revendication 2, **caractérisé en ce que**, lorsque les unités requises pour l'intervention prévue sont désaccouplées de la chaîne cinématique (2, 4, 6, 8), elles sont accouplées à la chaîne cinématique.

4. Procédé selon la revendication 2 ou 3, **caractérisé en ce que**, lorsque les unités non requises pour l'intervention prévue sont accouplées à la chaîne cinématique (2, 4, 6, 8), elles sont désaccouplées de la chaîne cinématique.

5. Procédé selon l'une quelconque des revendications 1 à 4, **caractérisé en ce que** les mesures de commande à interrompre par le dispositif de commande du véhicule (18) sont l'ouverture de la chaîne cinématique fermée (2, 4, 6, 8), la fermeture de la chaîne cinématique ouverte, ainsi que l'activation de freins supplémentaires et d'entraînements supplémentaires agissant sur la chaîne cinématique.

6. Procédé selon l'une quelconque des revendications 1 à 5, **caractérisé en ce que** le système de stabilisation comprend un appareil de commande prioritaire, auquel on associe plusieurs appareils de commande ou fonctions de commande agissant sur la chaîne cinématique du véhicule, et **en ce que** dans le cas d'une intervention d'un des appareils de commande ou de l'une des fonctions de commande subordonnés, un signal d'intervention est émis par l'appareil de commande prioritaire.

7. Procédé selon la revendication 6, **caractérisé en ce que** l'appareil de commande prioritaire est un appareil de commande EBS, auquel on associe au moins une fonction d'antiblocage et une fonction de régulation du patinage d'entraînement.

8. Procédé selon la revendication 6, **caractérisé en ce que** l'appareil de commande prioritaire est un système de stabilisation de la dynamique de conduite, auquel sont associées, en plus d'une fonction d'antiblocage et d'une fonction de régulation du patinage d'entraînement, d'autres fonctions comme des fonctions de stabilisation de dynamique longitudinale, verticale et transversale.
